# EUROPEAN PATENT SPECIFICATION

(11) **EP 0 473 623 B1**
(45) Date of publication and mention of the grant of the patent: **13.10.1993**
(21) Application number: 90906984.1
(22) Date of filing: 14.05.1990
(51) Int. Cl.: F16B 1/02, B23Q 1/28, F16D 55/228

(54) **METHOD AND DEVICE FOR LOCKING ROTARY BODIES**
VERFAHREN UND VORRICHTUNG ZUR VERRIEGELUNG VON DREHKÖRPERN
PROCEDE ET DISPOSITIF DE FIXATION DE CORPS ROTATIFS PAR BLOCAGE

(30) Priority: 26.05.1989 IT 6740089
(43) Date of publication of application: 11.03.1992
(73) Proprietor: GNANI, Dario, I-10137 Torino (IT); GNANI, Roberto, I-10137 Torino (IT)
(72) Inventor: GNANI, Roberto, I-10137 Torino (IT)
(74) Representative: Aprà, Mario
(86) International application number: EP9000780
(87) International publication number: WO9014521

(56) References cited:
- FR-A- 1 574 330
- FR-A- 2 629 745
- GB-A- 840 392
- GB-A- 1 414 915
- US-A- 2 155 680

## Description

This invention relates to a method and device for releasably locking a body which rotates about an axis to a stationary body in which the said rotating body bears an integral rotating annular or disc member which is symmetrical with respect to the said axis of rotation.

This invention applies preferably to the static releasable locking of for example a rotating plate with respect to a corresponding mounting, or a hub or shaft rotating integrally with a disc with respect to a stationary support.

Currently known releasable devices for locking bodies which rotate about an axis to a stationary body as specified above have one or more of the following disadvantages:
- the relative position of the two bodies is altered in order to achieve locking,
- in particular the rotating body and/or the annular or disc member integral therewith may be subjected to elastic deformation through being placed in contact with the stationary body or auxiliary locking means,
- fixed immovable locking is not achieved,
- although the rotating body and the stationary body are both immobilised, their relative positioning during static locking may be altered, giving rise to uncertainty in the final relative position of the two bodies when locked. This disadvantage may also depend on, among other things, manufacturing tolerances and plays,
- the position of the rotating body while locking is in progress is subject to unchangeable predetermined positioning constraints with respect to the stationary body, as a result of which absolute locking (without preexisting links) is impossible.

In particular, document GB-A-1 414 915 discloses a method for releasably locking a body which rotates about an axis to a stationary body, in which the said rotating body has an integral rotating annular or disc member which is symmetrical with respect to the said axis of rotation, whereby stationary clamping or gripping locking means, such as for example a calliper brake, straddle the said annular or disc member to lock when activated by applying pressure on the opposite sides of the said annular or disc member and at least one friction member integral with said stationary body is placed between said annular or disc member and the said locking means in such a way that when the said locking means are activated they lock the said rotating body by means of at least one said friction member which is pressed against the said annular or disc member.

Document GB-A-1 414 915 further discloses a locking device which comprises stationary clamping or gripping locking means, such as for example a calliper brake, which when activated lock by applying pressure to the opposite sides of the said annular or disc member and at least one friction member integral with the said stationary body placed between the said annular or disc member and the said locking means to be pressed following activation of said locking means against an opposite side of the said annular or disc member so as to lock said rotating body in relation to the stationary body by friction acting together with the said locking means.

Furthermore, a similar construction as in GB-A-1 414 915 is shown in document GB-A-840 392.

The method and device according to the above-cited documents allow the friction member to make a relative movement in relation to the stationary body due to the rotation of the annular or disc member when the locking means are activated.

This arrangement gives rise to uncertainity in the final relative position of the two bodies when locked, and a fixed immoble locking in wich the relative position of the two bodies is maintained stable through the time for which they are locked is not achieved by this arrangement. External forces may affect the locking.

Given the abovementioned disadvantages, this invention proposes to eliminate them.

In particular the principal object of this invention is to provide a method and device for releasably locking a body which rotates about an axis to a stationary body, in which the said rotating body has an integral rotating annular or disc member which is symmetrical with respect to the said axis of rotation, whereby:
- the relative position of the two bodies is not in any way altered in order to effect locking of one with respect to the other,
- in particular neither of the bodies nor the annular or disc member integral with the rotating body are subjected to dynamic deformations or forces positioning them in mutual contact with or in relation to any auxiliary means of locking,
- fixed immobile locking in which the relative position of the two bodies is maintained stable through the time for which they are locked is achieved,
- the moving body is locked with respect to the stationary body such that when the two bodies are immobile their relative positions during locking and therefore when locking is complete are not in any way altered, avoiding any margin of uncertainty concerning the effective final relative position of the said two bodies when locked,
- particularly immobile locking between the rotating body and the stationary body is achieved and can be achieved when the rotating body is in any position of angular rotation with respect to the stationary body.

A further object is to provide a locking method and device as specified which are simple and economical to implement and secure and reliable in use.

In order to accomplish these objects this invention provides a method for releasably locking a body which rotates about an axis to a stationary body, in which the said rotating body has an integral rotating annular or disc member which is symmetrical with respect to the said axis of rotation and in which locking means, such as a calliper brake or brake assembly, straddle the annular or disc member to lock when activated by applying pressure on the opposite sides of the said annular or disc member, essentially characterised in that at least one elastically flexible friction member, such as for example an elastic metal plate, is directly fixed to said stationary body and is placed between said annular or disc member and the said locking means, in such a way that when the said locking means are activated they lock the said rotating body to the stationary body by means of at least one said flexible friction member which is elastically inflected in the axial direction of the annular or disc member and pressed against the said annular or disc member and which transmits the braking reaction to the stationary body.

Advantageously the said locking means are separate from and independent of the stationary body and are provided with limited ability to tilt and move with respect to the said annular or disc member.

In view of the above objects and to implement the said method the invention also provides a device for releasably locking a body which rotates about an axis to a stationary body, in which the said rotating body has an integral rotating annular or disc member symmetrical with respect to the said axis of rotation and in which locking means, such as a calliper brake or brake assembly, straddle the annular or disc member and when activated lock by applying pressure on the opposite sides of the said annular or disc member, essentially characterised in that it comprises at least one elastically flexible friction member, such as for example an elastic metal plate, directly fixed to the said stationary body and placed between the said annular or disc member and the said locking means to be elastically inflected in the axial direction of the annular or disc member and pressed following activation of said locking means against an opposite side of the said annular or disc member so as to lock said rotating body in relation to the stationary body by friction acting together with the said locking means, the braking reaction being transmitted to the stationary body through at least one said flexible friction member itself.

Advantageously the said locking means are separate from and independent of the stationary body and are mounted with limited ability to tilt and move with respect to the said annular or disc member so as when activated to adjust to the variable geometry of the system formed by the said locking means and by the said at least one elastically flexible friction member.

The main advantages of the locking method and device according to the invention are essentially as follows:
- the relative position of two stationary and rotating bodies is not altered in order to achieve locking,
- in particular neither the rotating body nor the rotating annular or disc member integral therewith is subjected to any deformation in order to be placed in contact with the stationary body or auxiliary locking means,
- locking of appreciable rigidity and immobility is achieved,
- when locked with the bodies immobile the relative position of the rotating body with respect to the stationary body is not subjected to any change and manufacturing tolerances and plays therefore have no influence on locking, avoiding any uncertainty in the final positioning of the two locked bodies with respect to each other,
- absolute positional locking is obtained, that is locking which is independent of any predetermined constraints on the position of the rotating body with respect to the stationary body,
- a distributed clamping effect which is uniform with respect to the affected portion of the annular or disc member is achieved by means of the elastically flexible friction member on locking and no differences in static equilibrium before and after locking or in dynamic forces and reactions during locking itself therefore occur in the said bodies.

In particular, compared with the known method and device according to GB-A-1414915 and GB-A-840392, the locking method and device of the present invention provide elastically flexible friction members which are directly fixed to the stationary body. When pressing the friction members by means of locking means against the annular or disc member, the friction members are elastically inflected in the axial direction of the annular or disc member, without relative movement between the stationary body and the friction members.

The invention will now be described in detail with reference to the appended drawings which are provided by way of a non-restrictive example, in which:
- Figure 1 is a plan view from above of a rotating worktable provided with a pair of locking devices according to the invention in a diametrically opposed arrangement,
- Figure 2 is a view in elevation in the direction of arrow II in Figure 1, in which the parts are partially detached,
- Figure 3 is a view in partial cross-section along the line III-III in Figure 1, in which the gripping locking means of the pair of locking devices according to the invention are activated in the locking position,
- Figure 4 is a view similar to that in Figure 3, in which the gripping locking means are on the other hand illustrated in the resting position,
- Figure 5 is a plan view similar to that in Figure 1 but showing in diagrammatical form the hydraulic circuit supplying and controlling the gripping locking means of the locking devices.

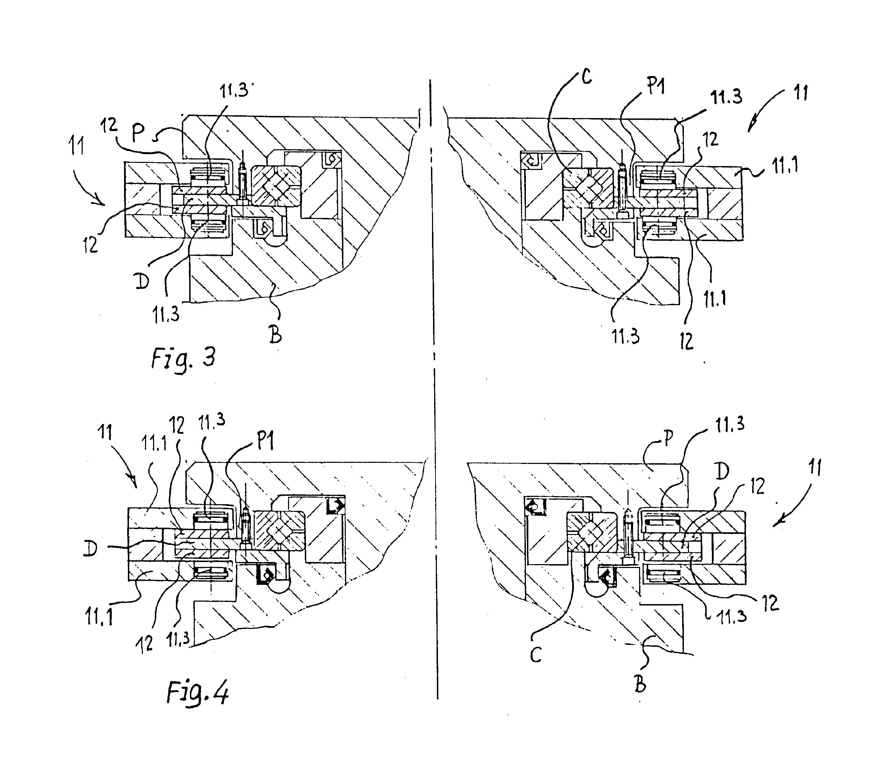

In the drawings T indicates a rotating work table. Table T has a stationary supporting base B with respect to which a rotating plate P, of circular perimeter, is rotatably supported through the intermediary of roller bearing means C (Figures 3, 4). A disc D having a circular ring of external diameter substantially corresponding to that of plate P, with respect to which the said disc D is axially spaced by means of an annular spacer P1 integral with plate P, is fixed coaxially to rotating plate P. Disc D is therefore arranged symmetrically with respect to the axis of rotation of plate P and rotates integrally with the said plate in a plane substantially normal to the axis of rotation of the said plate.

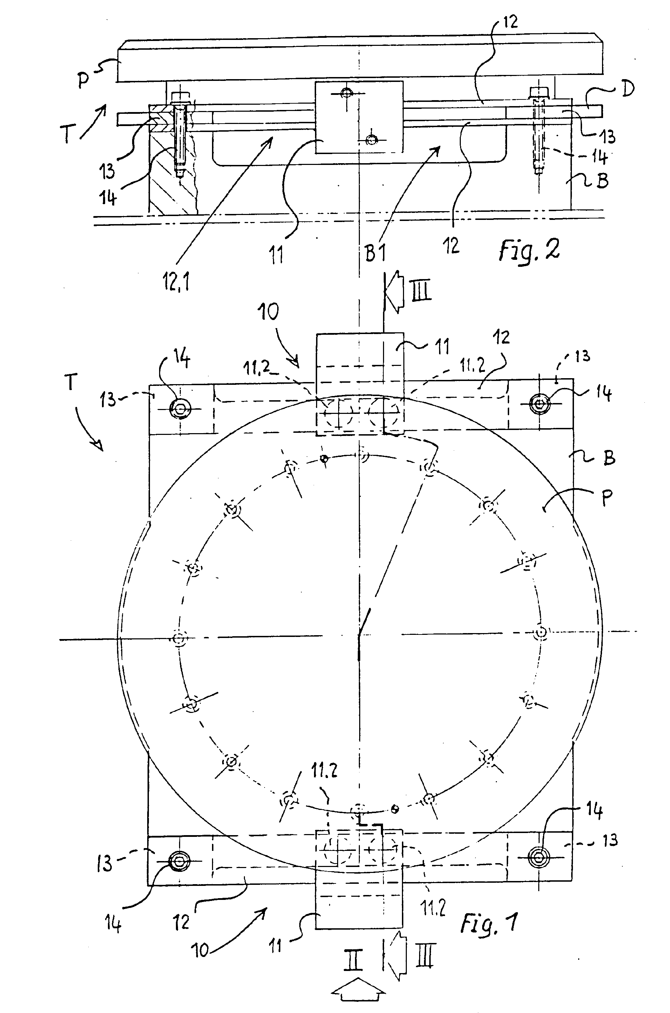

Rotating table T is provided with a pair of locking devices according to the invention, each of which is indicated as a whole by 10 (Figure 1), in a diametrically opposed arrangement.

Each locking device 10 comprises stationary clamping or gripping locking means 11. In accordance with the example illustrated these locking means 11 consist of a hydraulically operated calliper brake in which each half calliper 11.1 has a pair of hydraulic cylinders 11.2 with pistons 11.3.

The said gripping locking means 11 straddle disc D so that when activated they lock by pressing on the opposite sides of said disc D by means of pistons 11.3.

In addition to this, in accordance with the example illustrated, each locking device 10 includes a pair of elastically flexible friction members 12 consisting of a pair of elastic metal plates which are directly fixed to base B of rotating table T by attachment at their longitudinal extremities. Plates 12 yield elastically more readily than disc D.

This pair of elastic plates 12 is assembled as a packet 12.1 (Figure 2) in which superimposed plates 12 are held spaced apart by plate end spacers 13.

The packet of elastic plates 12 is assembled together and fixed with respect to base B by means of bolts 14 which pass through corresponding holes provided in the longitudinal end regions of plates 12, spacer plates 13 and base B. Bolts 14 screw into the said correspondingly threaded holes in base B.

Each packet 12.1 of elastic plates 12 spans a corresponding recess B1 which opens laterally and upwardly in base B.

Elastic plates 12 of packet 12.1 are arranged so that disc D can pass freely between them, each plate 12 being opposite a corresponding face of the said disc.

Also in each locking device 10 gripping locking means 11 are associated with elastic plate packets 12.1 so that each half calliper 11.1 is opposite a corresponding elastic plate 12. Also said gripping locking means 11 simply rest with ample play (Figure 4) on plate packet 12.1 with which they are associated so that they have a limited ability to tilt and move with respect to disc D adapting to the variable geometry of the gripper/elastic plate system with respect to the said disc.

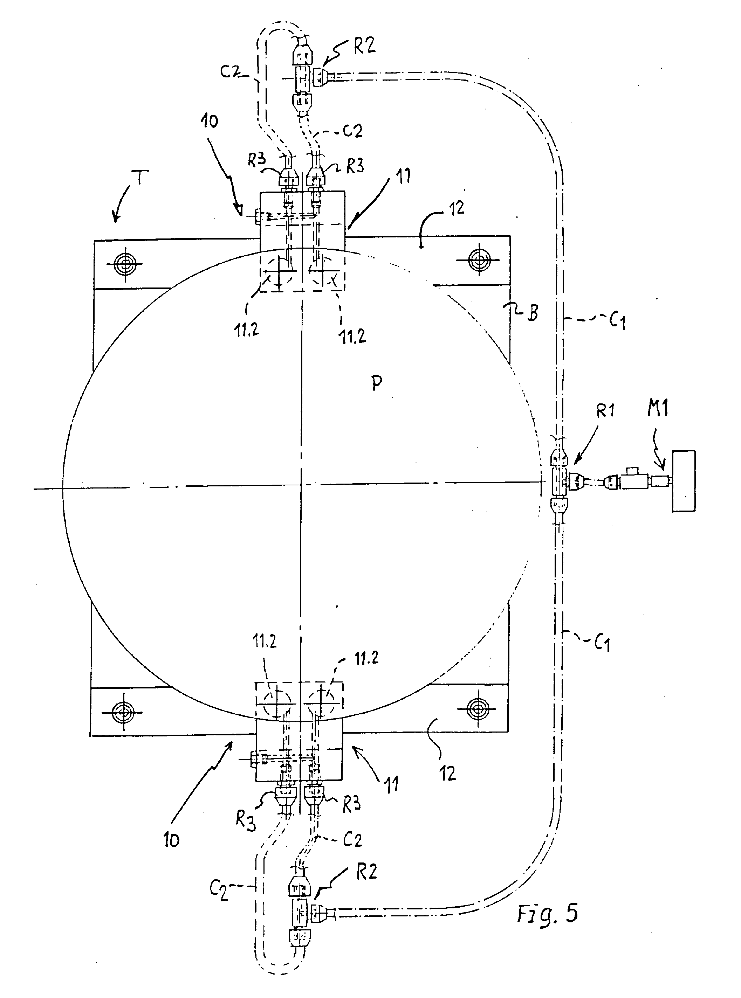

In Figure 5 M1 indicates means (illustrated diagrammatically) for the supply and pressurised fluid control of gripping locking means 11. The pressurised liquid, such as oil, is provided from means M1 via a first 2-way connection for pressurised liquid R1 and a corresponding pair-of outlet pipes C1 to further 2-way connections R2 from which corresponding pairs of flexible hoses C2 depart branching to corresponding pressurised liquid connections R3 each in communication with a hydraulic cylinder 11.2 of gripping locking means 11 of locking devices 10.

### Operation: (Figures 3, 4)

When hydraulic cylinders 11.2 of gripping locking means 11 are fed with pressurised liquid corresponding pistons 11.3 are forced to emerge partly and, pressing against elastic plates 12 of the plate package with which they are associated, cause these to bend elastically until they come into frictional contact with disc D, against which the plates are held by strong pressure. Rigid and immobile locking is achieved in this way (Figure 3).

Through the limited mobility and tiltability of gripping locking means 11 with respect to elastic plate packet 12.1 and therefore with respect to disc D the said means can adopt an optimum position, adapting to the variable geometry of the gripper/elastic plate system, with respect to the said disc.

It will be noted that the diametrically opposed arrangement of a pair of locking devices 10 ensures even better locking conditions from the point of view of dynamic and static equilibria.

When conversely gripping means 11 are deactivated, for example by interrupting the feed of pressurised liquid to hydraulic cylinders 11.2, elastic plates 12 return elastically to their original position, releasing disc D, which can then be again placed in rotation about its own axis without any passive resistance due to locking devices 10 (Figure 4).

It will be noted from Figure 4 that in this condition gripping locking means 11 are supported by means of a half calliper 11.1 directly against a plate 12 which supports them.

It will be noted that, for example, for each locking device it may be sufficient only to provide a single elastically flexible friction member (elastic plate) located between the annular or disc member and the clamping or gripping locking means and integral with respect to the stationary body. In this case the clamping or gripping locking means act directly against one side of the annular or disc member when locking, while the said locking means act against the other side by the intermediary of the said flexible friction member.

The elastically flexible friction member may also be provided as a body integral with the said stationary body.

Also the clamping or gripping locking means may have a different structure from that illustrated and described purely by way of a non-restrictive example. These may also be supported in a fixed position.

## Claims

1. Method for releasably locking a body (P) which rotates about an axis to a stationary body (B), in which the said rotating body (P) has an integral rotating annular or disc member (D) which is symmetrical with respect to the said axis of rotation and in which locking means (11), such as a calliper brake or brake assembly, straddle the annular or disc member (D) to lock when activated by applying pressure on the opposite sides of the said annular or disc member, characterised in that at least one elastically flexible friction member (12), such as for example an elastic metal plate, is directly fixed to said stationary body (B) and is placed between said annular or disc member (D) and the said locking means (11), in such a way that when the said locking means (11) are activated they lock the said rotating body (P) to the stationary body (B) by means of at least one said flexible friction member (12) which is elastically inflected in the axial direction of the annular or disc member (D) and pressed against the said annular or disc member (D) and which transmits the braking reaction to the stationary body (B).

2. Locking method according to claim 1, characterised in that the said locking means (11) are separate from and independent of the stationary body (B) and are provided with limited ability to tilt and move with respect to the said annular or disc member (D).

3. Locking device for implementing the method according to claims 1 or 2, in which a body (P) rotates about an axis to a stationary body (B), in which the said rotating body (P) has an integral rotating annular or disc member (D) symmetrical with respect to the said axis of rotation and in which locking means (11), such as a calliper brake or brake assembly, straddle the annular or disc member (D) and when activated lock by applying pressure on the opposite sides of the said annular or disc member, characterised in that it comprises at least one elastically flexible friction member (12), such as for example an elastic metal plate, directly fixed to the said stationary body (B) and placed between the said annular or disc member (D) and the said locking means (11) to be elastically inflected in the axial direction of the annular or disc member (D) and pressed following activation of said locking means (11) against an opposite side of the said annular or disc member (D) so as to lock said rotating body (P) in relation to the stationary body (B) by friction acting together with the said locking means (11), the braking reaction being transmitted to the stationary body (B) through at least one said flexible friction member (12) itself.

4. Locking device according to claim 3, characterised in that the said locking means (11) are separate from and independent of the stationary body (B) and are mounted with limited ability to tilt and move with respect to the said annular or disc member (D) so as when activated to adjust to the variable geometry of the system formed by the said locking means (11) and by the said at least one elastically flexible friction member (12).

5. Locking device according to one of claims 3 and 4, characterised in that it comprises a pair of elastically flexible friction members (12) and that the said pair of elastically flexible friction members (12) is assembled in the form of a packet (12.1) in which the elastically flexible members (12) are superimposed on top of each other and are spaced apart by means of spacers (13), the members (12) in the packet (12.1) being arranged so that said annular or disc member (D) can pass between them and each is opposite one corresponding side of the said annular or disc member.

6. Locking device according to claim 5, including locking means (11) which have two locking parts (half callipers 11.1), such as a calliper brake, characterised in that the said locking means (11) are associated with the packet (12.1) of elastically flexible members (12) so that each of the two locking parts (half calliper 11.1) opposes a corresponding elastically flexible member (12), said locking means (11) resting with play against the packet (12.1) with which they are associated so as to have limited ability to tilt and move with respect to the annular or disc member (D).

## Patentansprüche

1. Verfahren zur lösbaren Feststellung eines sich um eine Achse drehenden Körpers (P) gegenüber einem feststehenden Körper (B), bei dem der genannte sich um eine Achse drehende Drehkörper (P) ein integrales, sich mitdrehendes ring- oder scheibenförmiges Teil (D) aufweist, das symmetrisch zur genannten Drehachse angeordnet ist, und bei dem Feststellmittel (11), wie beispielsweise eine Scheibenbremse oder Bremsenkonstruktion, das ring- oder scheibenförmige Teil (D) umgreifen, um bei Betätigung ein Feststellen durch Druckbeaufschlagung der gegenüberliegenden Seiten des genannten ring- oder scheibenförmigen Teils zu bewirken, dadurch gekennzeichnet, daß mindestens ein elastisch biegsames Reibungsteil (12), wie beispielsweise eine elastische Metallplatte, direkt am genannten feststehenden Körper (B) angebracht ist und zwischen dem genannten ring- oder scheibenförmigen Teil (D) und den genannten Feststellmitteln (11) so angeordnet ist, daß bei Betätigung der genannten Feststellmittel (11) diese den genannten Drehkörper (P) gegenüber dem feststehenden Körper (B) durch mindestens ein genanntes biegsames Reibungsteil (12) feststellen, das in der axialen Richtung des ring- oder scheibenförmigen Teils (D) elastisch gebogen und gegen das genannte ring- oder scheibenförmige Teil (D) gepreßt wird und die Bremsreaktion auf den feststehenden Körper (B) überträgt.

2. Feststellverfahren nach Anspruch 1, dadurch gekennzeichnet, daß die genannten Feststellmittel (11) von dem feststehenden Körper (B) getrennt und unabhängig sind und sich in bezug auf das genannte ring- oder scheibenförmige Teil (D) in begrenztem Umfang neigen und bewegen können.

3. Feststellvorrichtung zur Durchführung des Verfahrens nach Anspruch 1 oder 2, bei der sich ein Drehkörper (P) um eine Achse gegenüber einem feststehenden Körper (B) dreht, wobei der genannte Drehkörper (P) ein integrales, sich mitdrehendes ring- oder scheibenförmiges Teil (D) aufweist, das symmetrisch zur genannten Drehachse angeordnet ist, und wobei Feststellmittel (11), wie beispielsweise eine Scheibenbremse oder Bremsenkonstruktion, das ring- oder scheibenförmige Teil (D) umgreifen und bei Betätigung ein Feststellen durch Druckbeaufschlagung der gegenüberliegenden Seiten des genannten ring- oder scheibenförmigen Teils bewirken, dadurch gekennzeichnet, daß sie mindestens ein elastisch biegsames Reibungsteil (12) umfaßt, wie beispielsweise eine elastische Metallplatte, die direkt am genannten feststehenden Körper (B) angebracht und so zwischen dem ring- oder scheibenförmigen Teil (D) und den genannten Feststellmitteln (11) angeordnet ist, um in der axialen Richtung des ring- oder scheibenförmigen Teils (D) gebogen und nach Betätigung der genannten Feststellmittel (11) gegen eine gegenüberliegende Seite des genannten ring- oder scheibenförmigen Teils (D) gepreßt zu werden und so den genannten Drehkörper (P) gegenüber dem feststehenden Körper (B) durch Reibung feststellt, indem sie mit den genannten Feststellmitteln (11) zusammenwirkt, wobei die Bremsreaktion durch mindestens ein genanntes biegsames Reibungsteil (12) selbst auf den genannten feststehenden Körper (B) übertragen wird.

4. Feststellvorrichtung nach Anspruch 3, dadurch gekennzeichnet, daß die genannten Feststellmittel (11) von dem feststehenden Körper (B) getrennt und unabhängig und so angebracht sind, daß sie sich in bezug auf das genannte ring- oder scheibenförmige Teil (D) in begrenztem Umfang neigen und bewegen können, um sich bei Betätigung an die veränderliche Form des Systems anzupassen, das durch die genannten Feststellmittel (11) und durch das genannte mindestens eine elastisch biegsame Reibungsteil (12) gebildet wird.

5. Feststellvorrichtung nach Anspruch 3 oder 4, dadurch gekennzeichnet, daß sie aus einem Paar elastisch biegsamer Reibungsteile (12) besteht und daß das genannte Paar elastisch biegsamer Reibungsteile (12) zu einem Paket (12.1) zusammengebaut ist, in dem die elastisch biegsamen Teile (12) übereinander angeordnet und durch Abstandshalter (13) auseinandergehalten werden, wobei die Teile (12) im Paket (12.1) so angeordnet sind, daß das genannte ring- oder scheibenförmige Teil (D) zwischen diesen hindurchgehen kann und jedes einer entsprechenden Seite des genannten ring- oder scheibenförmigen Teils gegenüberliegt.

6. Feststellvorrichtung nach Anspruch 5 einschließlich Feststellmitteln (11), die zwei Feststellteile, wie beispielsweise bei einer Scheibenbremse, (Scheibenbremsenhälften 11.1) aufweisen, dadurch gekennzeichnet, daß die genannten Feststellmittel (11) dem Paket (12.1) elastisch biegsamer Teile (12) zugeordnet sind, und zwar so, daß jedes der beiden Feststellteile (Scheibenbremsenhälften 11.1) einem entsprechenden elastisch biegsamen Teil (12) gegenübersteht, wobei die genannten Feststellmittel (11) mit Spiel auf dem Paket (12.1) ruhen, dem sie zugeordnet sind, so daß sie sich in bezug auf das ring- oder scheibenförmige Teil (D) in begrenztem Umfang neigen und bewegen können.

## Revendications

1. Procédé de verrouillage desserrable d'un corps (P) en rotation autour d'un axe à un corps stationnaire (B), dans lequel ledit corps rotatif (P) a un organe (D) en disque ou annulaire rotatif solidaire qui est symétrique par rapport audit axe de rotation et dans lequel des moyens de verrouillage (11), tels qu'un frein à étrier ou un assemblage à freins chevauchent l'organe (D) en disque ou annulaire pour effectuer le verrouillage lorsqu'ils sont actionnés, en appliquant une pression sur les côtés opposés dudit organe en disque ou annulaire, caractérisé en ce qu'au moins un organe de friction flexible élastiquement (12), tel que par exemple une plaque métallique élastique, est fixé directement audit corps stationnaire (B) et est placé entre ledit organe (D) en disque ou annulaire et lesdits moyens de verrouillage (11), de telle sorte que lorsque lesdits moyens de verrouillage (11) sont actionnés, ils effectuent le verrouillage dudit corps rotatif (P) au corps stationnaire (B) à l'aide d'au moins undit organe de friction flexible (12) qui est infléchi élastiquement dans la direction axiale de l'organe (D) en disque ou annulaire et pressé contre ledit organe (D) en disque ou annulaire et qui transmet la réaction de freinage au corps stationnaire (B).

2. Procédé de verrouillage selon la revendication 1, caractérisé en ce que lesdits moyens de verrouillage (11) sont séparés et indépendants du corps stationnaire (B) et sont pourvus d'une capacité limitée d'inclinaison et de mouvement par rapport audit organe (D) en disque ou annulaire.

3. Dispositif de verrouillage pour la mise en oeuvre du procédé selon les revendications 1 ou 2, dans lequel un corps (P) tourne autour d'un axe d'un corps stationnaire (B), dans lequel ledit corps rotatif (P) a un organe (D) en disque ou annulaire solidaire symétrique par rapport audit axe de rotation et dans lequel des moyens de verrouillage (11), tels qu'un frein à étrier ou un assemblage à freins chevauchent l'organe (D) en disque ou annulaire et, lorsqu'ils sont actionnés, effectuent le verrouillage en appliquant une pression sur les côtés opposés dudit organe en disque ou annulaire, caractérisé en ce qu'il comporte au moins un organe de friction flexible élastiquement (12), tel que par exemple une plaque métallique élastique, fixé directement audit corps stationnaire (B) et placé entre ledit organe (D) en disque ou annulaire et lesdits moyens de verrouillage (11), à infléchir élastiquement dans la direction axiale de l'organe (D) en disque ou annulaire et à presser, après l'actionnement desdits moyens de verrouillage (11), contre un côté opposé dudit organe (D) en disque ou annulaire de manière à verrouiller ledit corps rotatif (P) par rapport au corps stationnaire (B) par friction agissant conjointement auxdits moyens de verrouillage (11), la réaction de freinage étant transmise au corps stationnaire (B) par l'intermédiaire d'au moins undit organe de friction flexible (12) même.

4. Dispositif de verrouillage selon la revendication 3, caractérisé en ce que lesdits moyens de verrouillage (11) sont séparés et indépendants du corps stationnaire (B) et sont montés avec une capacité limitée d'inclinaison et de mouvement par rapport audit organe (D) en disque ou annulaire, de sorte que lorsqu'ils sont actionnés, ils s'adaptent à la géométrie variable du système formé par lesdits moyens de verrouillage (11) et par ledit au moins un organe de friction flexible élastiquement (12).

5. Dispositif de verrouillage selon l'une des revendications 3 ou 4, caractérisé en ce qu'il comprend une paire d'organes de friction flexibles élastiquement (12) et en ce que ladite paire d'organes de friction flexibles élastiquement (12) est assemblée sous forme de paquet (12.1) dans lequel les organes flexibles élastiquement (12) sont superposés les uns sur les autres et sont écartés à l'aide de pièces d'écartement (13), les organes (12) dans le paquet (12.1) étant disposés de telle sorte que ledit organe (D) en disque ou annulaire puisse passer entre eux, et chacun est opposé à un côté correspondant dudit organe en disque ou annulaire.

6. Dispositif de verrouillage selon la revendication 5, comprenant des moyens de verrouillage (11) qui ont deux pièces de verrouillage (demi-étriers 11.1), telles qu' un frein à étrier, caractérisé en ce que lesdits moyens de verrouillage (11) sont associés au paquet (12.1) d'organes flexibles élastiquement (12) de telle sorte que chacune des deux pièces de verrouillage (demi-étrier 11.1) est opposée à un organe flexible élastiquement (12) correspondant, lesdits moyens de verrouillage (11) reposant avec du jeu contre le paquet (12.1) avec lequel ils sont associés de manière à avoir une capacité limitée d'inclinaison et de mouvement par rapport à l'organe (D) en disque ou annulaire.
